# EUROPÄISCHE PATENTSCHRIFT

(11) **EP 1 888 390 B1**
(45) Veröffentlichungstag und Bekanntmachung des Hinweises auf die Patenterteilung: **09.12.2009**
(21) Anmeldenummer: 06754151.6
(22) Anmeldetag: 06.06.2006
(51) Int. Cl.: B62B 5/00, B65D 5/02, B65D 19/42

(54) **TRANSPORTVORRICHTUNG MIT VERSTAUBARER ROLLENEINRICHTUNG**
CONVEYING APPARATUS COMPRISING A STOWABLE ROLLER MECHANISM
DISPOSITIF DE TRANSPORT COMPRENANT UN MECANISME DE ROULEMENT ARRIMABLE

(30) Priorität: 06.06.2005 DE 202005008804 U; 06.06.2005 DE 202005008802 U
(43) Veröffentlichungstag der Anmeldung: 20.02.2008
(73) Patentinhaber: Go-Caddy Promotion Packaging GmbH, 1060 Wien (AT)
(72) Erfinder: PACHLER, Robert, A-1070 Wien (AT)
(74) Vertreter: Dilg, Haeusler, Schindelmann Patentanwaltsgesellschaft mbH
(86) Internationale Anmeldenummer: PCT/EP2006/005379
(87) Internationale Veröffentlichungsnummer: WO 2006/131310

(56) Entgegenhaltungen:
- EP-A- 0 698 364
- WO-A-94/19642
- WO-A-2004/022407
- DE-B- 1 287 289
- DE-U1- 29 901 628
- US-A- 6 082 956

## Beschreibung

Die Erfindung betrifft einen Behälter, eine Trage- und Rolleinrichtung und eine Transportvorrichtung.

Eine Transportvorrichtung kann beispielsweise durch eine beladene Sackkarre gegeben sein. Eine in einem Behälter befindliche Last kann auf ein Trageelement gelegt werden. Zum Transport kann die Sackkarre um die Drehachse der Räder der Karre gekippt werden, so dass die Last sich für den Transport auf ein Halteelement und auf ein Trageelement verteilt. Nachteilig ist, dass die Last auf der Sackkarre bloß aufliegt und somit nicht besonders stabil ist. Überdies sind Sackkarren häufig nur für den Transport großer Lasten praktikabel.

WO 94/19642 beschreibt einen tragbaren Anzeigestand, welcher aus einem Pappematerial geformt ist. Ferner weist der Anzeigestand eine verdeckte Radvorrichtung auf, welche das Gewicht des Anzeigestands tragen und den Anzeigestand verschieben kann. Die Radvorrichtung wird über eine Tragleiste mit dem Anzeigestand befestigt.

DE 29901628 U1 beschreibt einen Flaschenkasten mit einer Transporthilfe. An einen Flaschenkasten kann ein Transportbügel und eine Rollenvorrichtung angeordnet werden, um den Flaschenkasten zu transportieren.

Für kleinere Lasten, wie zum Beispiel Prospektmaterial, welches auf Informationsveranstaltungen, insbesondere Messen, oftmals in großen Mengen verteilt und von Interessenten mitgenommen wird, ist das Prinzip der Sackkarre jedoch nicht geeignet, da ein sicherer, leichter und die Fortbewegung möglichst wenig behindernder und zuverlässiger Transport gewährleistet sein soll.

Es ist eine Aufgabe der vorliegenden Erfindung, einen sicheren und stabilen Transport von Lasten zu ermöglichen.

Diese Aufgabe wird durch einen Behälter, durch eine Trage- und Rolleinrichtung und durch eine Transportvorrichtung mit den Merkmalen gemäß den unabhängigen Patentansprüchen gelöst.

Gemäß einem exemplarischen Ausführungsbeispiel der Erfindung ist ein Behälter zum Befestigen an einer Trage- und Rolleinrichtung bereitgestellt, die eine Trageplatte und mindestens eine daran befestigte Rolle aufweist. Der Behälter weist einen Bodenbereich auf, der Aussparungen aufweist, zwischen welchen ein flächiger Abschnitt gebildet ist. Die mindestens eine Rolle kann derart durch mindestens eine der Aussparungen hindurchführbar sein, dass die Trageplatte im Inneren des Behälters angrenzend an den flächigen Abschnitt positionierbar ist und dass die mindestens eine Rolle aus dem Bodenbereich des Behälters nach außen hin vorstehen kann.

Gemäß einem anderen exemplarischen Ausführungsbeispiel der Erfindung ist eine Trage- und Rolleinrichtung zum Befestigen an einem Behälter bereitgestellt, der einen Bodenbereich mit Aussparungen aufweist, zwischen welchen ein flächiger Abschnitt gebildet ist. Die Trage- und Rolleinrichtung kann eine Trageplatte und mindestens eine an der Trageplatte befestigte Rolle aufweisen. Durch mindestens eine der Aussparungen kann die mindestens eine Rolle derart hindurchführbar sein, dass die Trageplatte im Inneren des Behälters angrenzend an den flächigen Abschnitt positionierbar ist und dass die mindestens eine Rolle über den Bodenbereich des Behälters nach außen hin vorsteht.

Gemäß noch einem anderen exemplarischen Ausführungsbeispiel der Erfindung ist eine Transportvorrichtung geschaffen, die einen Behälter mit den oben beschriebenen Merkmalen und eine Trage- und Rolleinrichtung mit den oben beschriebenen Merkmalen zum Befestigen an dem Behälter aufweist.

Diese Gegenstände haben insbesondere den Vorteil, dass einerseits eine sichere Befestigung des Behälters an der Trage- und Rolleinrichtung ermöglicht ist, indem durch Aussparungen in der Bodenplatte des Behälters eine oder mehrere Rollen der Trage- und Rolleinrichtung durchgeführt werden können, so dass die Trageplatte im Inneren des Behälters verlaufend eine Stütz- und Befestigungsfunktion erfüllen kann und dass simultan die Rollen aus dem Bodenbereich des Behälters hervorstehen, so dass ein rollendes Transportieren uneingeschränkt möglich ist.

Anschaulich ist somit erfindungsgemäß eine Transportvorrichtung geschaffen, die aus zwei separaten Komponenten gebildet sein kann, nämlich einem Behälter und einer dazugehörigen Trage- und Rolleinrichtung. Die Trage- und Rolleinrichtung kann einklappbar vorgesehen sein und kann somit (zum Lagern oder Transportieren) platzsparend im Inneren des Behälters untergebracht werden. In einem ausgeklappten Zustand der Trage- und Rolleinrichtung kann eine Tragefläche der Trage- und Rolleinrichtung zum Beispiel durch Schlitze in einem Bodenteil des Behälters so hindurchgeführt werden, dass Räder der Trage- und Rolleinrichtung ungehindert nach unten aus dem Behälter austreten können und dass dennoch eine sichere und stabile Befestigung des Behälters an der Trage- und Rolleinrichtung ermöglicht ist. Die dann im Inneren angeordnete Tragefläche der Trage- und Rolleinrichtung ist dazu geeignet, eine ausreichende große Last, insbesondere im Bereich von mehreren Kilogramm und mehr aufzunehmen und sicher zu stützen. Die unten aus dem Roller austretenden Rollen ermöglichen dann eine rollende Bewegung des Behälters und des darin einfüllbaren Transportguts.

Zum Zusammenbauen des Behälters und der Trage- und Rolleinrichtung zu einer erfindungsgemäßen Transportvorrichtung kann also zunächst die Trage- und Rolleinrichtung in einen betriebsbereiten Zustand versetzt werden, in welchem die Rollen ausgeklappt sind. Dann können die Rollen durch Schlitze im Bodenbereich des Behälters überstehen. Ein solcher Bodenbereich kann gebildet werden, indem Klappelemente zu einem Behälterboden zusammengeklappt werden, wodurch die Tragefläche der Trage- und Rolleinrichtung ins Innere des Behälters, zum Beispiel angrenzend an die zusammengeklappten Klappelemente, gebracht werden kann. Die Tragefläche kann zwischen die Bodenplatten des Wellpappebehälters geklemmt werden.

Es ist zu betonen, dass die beschriebenen Ausführungsbeispiele lediglich exemplarisch sind.

Alternativ oder ergänzend kann an dem Behälter ein Halteelement vorgesehen werden, so dass eine in dem Behälter befindliche Last samt Behälter und Trage- und Rollvorrichtung von einem Benutzer mittels Betätigens des Halteelements unter Verwendung der Rolleinrichtung bequem gerollt bzw. gesteuert werden kann.

Die Aussparung kann zum Beispiel dadurch hergestellt werden, dass das entsprechende Material der Behälterwand entfernt wird, zum Beispiel indem ein Teil aus der Behälterwand ausgeschnitten wird. Die Aussparung kann aber auch dadurch hergestellt werden, dass in dem entsprechenden Material zum Beispiel mit einem geeigneten Messer ein Schnitt angefertigt wird, ohne Material der Behälterwand zu entfernen. Oder es können bereits bei einem industriellen Herstellungsprozess des Behälters, zum Beispiel realisiert als ein Karton- oder Wellpappebehälter, entsprechende Aussparungen vorgesehen werden. Der Behälter kann somit zum Beispiel auch von vornherein mit einer solchen Aussparung hergestellt werden, zum Beispiel als entsprechend geformtes Kunststoff- oder Wellpappeteil. Zum Beispiel kann eine solche Aussparung hergestellt werden, indem mit einer an sich bekannten Stanze ein normaler Karton entsprechend ausgestanzt wird.

Der Behälter kann eine Deckfläche oder einen Deckelbereich aufweisen, die den Behälter nach oben hin abschließt. Dieser Deckelbereich kann gepolstert sein, um es einem Benutzer bequem zu ermöglichen, diesen Deckelbereich als Sitzfläche zu verwenden. Um die Last eines menschlichen Benutzers tragen zu können, kann der Deckelbereich mechanisch verstärkt sein, was zum Beispiel durch eine Behälterwanddicke von 1 cm ermöglicht werden kann. Eine ausreichende Behälterwanddicke kann zum Beispiel durch Zusammenfügen (zum Beispiel Zusammenkleben) zweier (oder mehr) Stücke Wellpappe erreicht werden. Eine mechanische Verstärkung ist auch erreichbar, indem Streben in die Deckfläche (oder in andere Flächen oder Kanten des Behälters) integriert werden, zum Beispiel aus Holz, Plastik, Metall oder verstärkter Pappe. Um ein Sitzen des Benutzers weiter zu erleichtern, kann die Deckfläche flach (insbesondere parallel zu einem ebenen Boden, auf dem der Behälter oder die Transportvorrichtung geführt wird) ausgebildet sein.

Exemplarische Weiterbildungen der Erfindung ergeben sich aus den abhängigen Patentansprüchen.

Im Weiteren werden Ausgestaltungen des erfindungsgemäßen Behälters beschrieben. Diese Ausgestaltungen gelten auch für die Trage- und Rolleinrichtung sowie für die Transportvorrichtung.

Der Behälter kann aus zumindest einem der Materialien Karton, Wellpappe, Kunststoff, Blech und Holz hergestellt werden. Bevorzugt ist hierbei eine Herstellung aus Karton oder Wellpappe, da diese Materialen eine kostengünstige Fertigung und eine flexible Formgebung ermöglichen, sodass mit geringem Aufwand und hoher Flexibilität ein stabiler und zuverlässiger Behälter gebildet werden kann. Es liegt insbesondere auch im Bereich der Erfindung, sämtliche Komponenten der Transportvorrichtung, nämlich den Behälter und die Trage- und Rolleinrichtung, im Wesentlichen aus Wellpappe oder Karton vorzusehen und somit die Fertigungskosten des Gesamtsystems herabzusetzen. Alternativ können diese Komponenten jedoch auch aus Kunststoff und/oder Metall hergestellt werden.

Der Behälter kann in seinem Inneren mindestens eine Trennwand aufweisen, mittels welcher mindestens eine Trennwand ein Stauvolumen im Inneren des Behälters in eine Mehrzahl von Teilvolumina aufteilbar ist. Eine solche Trennwand kann einfach in den Behälter eingesetzt werden und zum Beispiel auch aus Karton oder Wellpappe vorgesehen sein. Eine solche Trennwand ermöglicht es, unterschiedliche Volumenbereiche innerhalb des Behälters voneinander zu separieren, zum Beispiel um getrennte Stauräume für mehrere (zum Beispiel sechs oder acht) Weinflaschen zu schaffen, die dann in dem Behälter ohne Kontakt miteinander transportiert werden können. Dann kann der Behälter in kostengünstiger Weise für das bequeme Transportieren dieser Weinflaschen verwendet werden, wodurch die Benutzerfreundlichkeit gegenüber herkömmlichen Getränke-Transportvorrichtungen erhöht werden kann.

Somit eignet sich der Behälter insbesondere zum Transportieren von Getränken, insbesondere von Wein oder Mineralwasser. Allerdings sind geeignete Anwendungsgebiete der Erfindung nicht auf Getränke beschränkt. So kann der Behälter zum Beispiel auch zum Transportieren von Büromaterialien, insbesondere von Papier oder Prospekten, verwendet werden. Grundsätzlich kann der Behälter für alles Transportierbare verwendet werden, so zum Beispiel auch im Bürobereich oder auf Messen. Es ist insbesondere möglich, Büropapier als zu transportierendes Gut einzusetzen. Der Behälter kann für alle Gegenstände anstelle einer Tragetüte eingesetzt werden, wobei mit dem erfindungsgemäßen Behälter der Benutzerkomfort, die Stabilität und das maximale Transportgewicht erhöht werden können.

Insbesondere kann bei dem Behälter mindestens eine Außenseite der Behälterwand bedruckt sein. Es können auch alle Wände des Behälters (innen und/oder außen) bedruckt sein, insbesondere jede Komponente aus Karton oder Pappe. Mit anderen Worten ist es möglich, die Behälterwände von außen mit allen möglichen Drucken zu versehen, zum Beispiel Hinweise auf ein Unternehmen, Hinweise auf den Inhalt des Behälters, Bedienungsanweisungen, Warnhinweise, etc. Die hierfür zur Verfügung stehende Nutzfläche ist erfindungsgemäß sehr groß, da das maximale Behältervolumen und somit auch die Dimension der Behälterwände durch das Vorsehen der Aussparungen und die daraus resultierende platzsparende Unterbringbarkeit der Tragefläche der Trage- und Rolleinrichtung erhöht werden können.

Aussparungen einem Klappelement, das zumindest einen Teil des Bodens des Behälters bilden kann, können als zwei, drei oder mehr im Wesentlichen parallel verlaufende Schlitze vorgesehen sein. Durch solche Schlitze können nicht nur die Rollen, sondern optional auch eine Trage- oder Stützeinrichtung auf einer Unterseite der Trage- und Rolleinrichtung untergebracht werden. Diese Rollen können einfach entlang des Schlitzes in die Behälterwand eingeführt werden, wodurch ein verbleibender flächiger Bereich zwischen den Schlitzen parallel verlaufend zu der Trageplatte der Trage- und Rolleinrichtung positioniert wird.

Der Behälter kann eine Mehrzahl von zum Bilden des Bodenbereichs miteinander in Eingriff bringbare Klappelemente aufweisen. Solche Klappelemente können zum Bilden eines stabilen Behälterbodens miteinander verschachtelt bzw. ineinander versteckt werden.

Das die Aussparungen aufweisende Klappelement kann im Wesentlichen trapezförmig sein, wobei die Aussparungen im Wesentlichen orthogonal zu den beiden parallelen Seiten des im Wesentlichen trapezförmigen Klappelements verlaufend angeordnet sein können. Eine solche trapezförmige Konfiguration ermöglicht ein einfaches Zusammenklappen der Klappelemente und simultan ein einfaches Durchführen der Trage- und Rolleinrichtung durch die Schlitze oder sonst wie geformten Aussparungen des Behälters.

Insbesondere kann der Behälter vier Klappelemente aufweisen, die an den unteren Endabschnitten von Seitenwänden des Behälters angebracht sein können, wobei ein dem die Aussparungen aufweisendes Klappelement gegenüberliegendes Klappelement eine Befestigungsöffnung aufweisen kann, mit der ein Endabschnitt des die Aussparung aufweisenden Klappelements in Eingriff bringbar ist. Anders ausgedrückt kann ein Endabschnitt des die Aussparungen aufweisenden Klappelements, in welche die Rollen der Trage- und Rolleinrichtung bereits eingeführt sind, zum Bilden eines festen Behälterbodens mit einem entsprechend geformten Gegenstück an einem gegenüberliegend angeordneten Klappelement befestigt werden. Auf diese Weise können die beiden gegenüberliegend angeordneten Klappelemente gekoppelt werden, wobei zuvor die orthogonal dazu orientierten Klappelemente zum Bilden eines Behälterbodenteils eingeklappt werden.

Das die Befestigungsöffnung aufweisende Klappelement kann (abgesehen von der Befestigungsöffnung) im Wesentlichen rechteckförmig sein, wobei eine entsprechende Ausnehmung oder Befestigungsöffnung in einem Randbereich dieses Klappelements die Befestigung mit dem die Aussparungen aufweisenden Klappelements ermöglicht.

Die restlichen beiden Klappelemente können als im Wesentlichen Trapeze gebildet sein.

Der erfindungsgemäße Behälter kann ferner eine Abtrennung aufweisen, mittels welcher ein Stauvolumen im Inneren des Behälters räumlich von der Trageplatte im Inneren des Behälters, angrenzend an den flächigen Abschnitt, abtrennbar ist. Gemäß dieser Ausgestaltung kann vermieden werden, dass das Tragelement freiliegend im Laderaum angeordnet ist. Ein entsprechendes Abtrennelement kann Laderaum und Tragefläche voneinander separieren, sodass zum Beispiel ein unerwünschter Kontakt zwischen Tragefläche und Ladegut (zum Beispiel empfindliche Weinflaschen) vermieden werden kann. Eine solche Abtrennung kann zum Beispiel als eine Bodenplatte aus Wellpappe realisiert werden, die nach Befestigen von Behälter und Trage- und Rolleinrichtung in den Boden des Behälters eingeführt wird, bevor das eigentlich einzuführende Füllgut eingeführt wird.

Der Behälter kann insbesondere quaderförmig, halbkugelförmig oder halbzylinderförmig ausgebildet sein. Auch eine kugelförmige Geometrie ist möglich. Bei Vorsehen eines halbzylinderförmigen Behälters kann dieser mit einer der drei planen Flächen an der Tragefläche der Trage- und Rolleinrichtung befestigt werden.

Der Behälter kann ferner eine Mehrzahl von Seitenwänden aufweisen, wobei in mindestens einer Seitenwand ein Halteelement gebildet sein kann. Ferner kann der Behälter einen Deckelbereich aufweisen, wobei an dem Deckelbereich ein Halteelement gebildet sein kann. Ferner kann der Behälter eine Mehrzahl von Seitenwänden und einen Deckelbereich aufweisen, wobei an mindestens einer Seitenwand und an dem Deckelbereich ein Halteelement gebildet sein kann. Das Halteelement kann ein Loch oder ein Haltegriff sein, und kann es einem Benutzer ermöglichen, mit einer oder beiden Händen den Behälter bequem zu greifen, so dass es dem Benutzer ermöglicht werden kann, die Transportvorrichtung zielgenau zu manövrieren.

Gemäß den beschriebenen Ausgestaltungen können zum Beispiel an Seitenwänden und/oder an einem Deckelbereich des Behälters entsprechende Löcher eingebracht werden, die als Handgriff für einen Benutzer dienen können, um den Behälter mit darin angeordneter Trage- und Rolleinrichtung wahlweise zu kippen, fest abzustellen oder zu rollen. Wenn solche Löcher sowohl in Seitenwänden als auch im Deckelbereich vorgesehen sind, ist eine besonders gute Kraftübertragung zwischen Benutzer und Transportvorrichtung möglich.

Es kann aber auch an dem Behälter ein Haltegriff vorgesehen sein, zum Beispiel eine am Äußeren des Behälters angebrachte Lasche. Auch kann ein aus dem Behälter teleskopartig ausfahrbarer Haltegriff vorgesehen werden, der selektiv aus dem Behälter herausgeführt und wieder hereingeführt werden kann. Damit kann einem Benutzer zum Beispiel ein Behälter mit Dimensionen komfortabel bedienbar gemacht werden, die wesentlich kleiner als die eines menschlichen Benutzers sind. Wenn der Behälter aus Wellpappe hergestellt ist, kann auch ein solches ausfahrbares Halteelement aus Karton oder Wellpappe gebildet werden und aus Gründen der Platzersparnis in einem nicht benötigten Zustand in den Karton zurückgeschoben und darin versenkt werden.

Im Weiteren werden exemplarische Ausführungsbeispiele der Trage- und Rolleinrichtung beschrieben. Diese gelten auch für den Behälter sowie für die Transportvorrichtung und umgekehrt.

Die Trage- und Rolleinrichtung kann ein Stützelement aufweisen, mittels welchem die Trage- und Rolleinrichtung auf einem Untergrund abstützbar ist. Ein solches Stützelement kann zum Beispiel als gebogenes Metallteil vorgesehen werden, das gemeinsam mit den Rollen auf einer Drehachse vorgesehen werden kann, wobei mittels gemeinsamen Drehens von Rollen und Stützelement diese Komponenten im Wesentlichen zweidimensional auf die Ebene der Trageplatte gebracht werden können, oder im Wesentlichen senkrecht zu der Trageplatte.

Die mindestens eine Rolle und/oder das Stützelement können einklappbar vorgesehen sein derart, dass im eingeklappten Zustand die Trage- und Rolleinrichtung eine im Wesentlichen flächige Struktur bildet. Dies schafft die Grundlage dafür, dass die Trage- und Rolleinrichtung platzsparend in dem Behälter aufgenommen werden kann, und zwar in einem zusammengelegten wie auch in einem auseinandergefalteten Zustand des Behälters.

Erfindungsgemäß kann anschaulich ein kostengünstig fertigbarer und stabiler Trolley geschaffen werden.

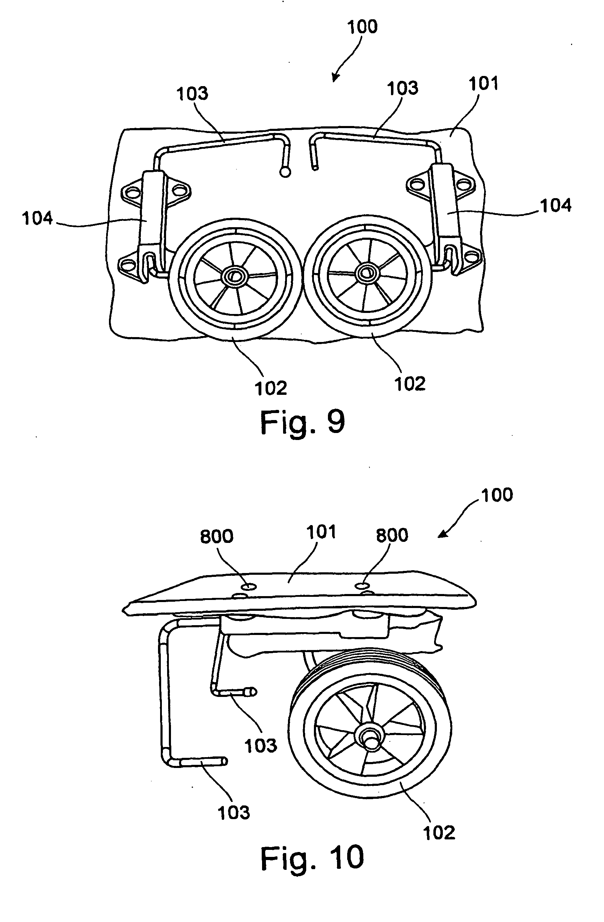

Als eine Alternative zu dem Behälter, bei dem der Bodenbereich Aussparungen aufweist, zwischen welchen ein flächiger Abschnitt gebildet ist, wobei mindestens eine Rolle durch mindestens eine der Aussparungen hindurchführbar ist, so dass eine Trageplatte im Inneren des Behälters positionierbar ist, ist auch folgende Konfiguration möglich: Ein einfacher Behälter (zum Beispiel mit Seitenwänden, Deckel und Boden), zum Beispiel aus Pappe oder Karton, kann fertig hergestellt werden, und kann optional mit einer Haltevorrichtung versehen werden. Ferner kann eine Platte mit daran vorgesehenen Rädern (zum Beispiel eine Anordnung ähnlich wie in Fig. 10) einfach an der Unterseite des Kartons befestigt werden, zum Beispiel festgeklebt, vernietet oder festgetackert werden. Dies stellt eine sehr einfache, kostengünstige und dennoch stabile und gut handhabbare Ausgestaltung dar. Eine solche Ausgestaltung kann in exemplarischen Ausführungsformen jede der im Rahmen dieser Anmeldung beschriebenen Merkmale enthalten, insbesondere jede der Ausgestaltungen gemäß der abhängigen Patentansprüche 2 bis 6, 12 bis 16.

Im Folgenden werden zur weiteren Erläuterung und zum besseren Verständnis der vorliegenden Erfindung Ausführungsbeispiele unter Bezugnahme auf die beigefügten Zeichnungen näher beschrieben.

### Es zeigen:

- Fig. 1: unterschiedliche Ansichten einer Trage- und Rolleinrichtung gemäß einem exemplarischen Ausführungsbeispiel der Erfindung.
- Fig. 2: unterschiedliche Ansichten einer Transportvorrichtung gemäß einem exemplarischen Ausführungsbeispiel der Erfindung.
- Fig. 3: eine Draufsicht eines Behälters gemäß einem exemplarischen Ausführungsbeispiel der Erfindung in einem ersten Betriebszustand.
- Fig. 4: den Behälter aus Fig. 3 in einem zweiten Betriebszustand.
- Fig. 5: den Behälter aus Fig. 3, in einem dritten Betriebszustand.
- Fig. 6: den Behälter aus Fig. 3 in einem vierten Betriebszustand.
- Fig. 7: einen Behälter und eine Trage- und Rolleinrichtung gemäß einem exemplarischen Ausführungsbeispiel der Erfindung.
- Fig. 8: eine obere Ansicht einer Trage- und Rolleinrichtung gemäß einem exemplarischen Ausführungsbeispiel der Erfindung.
- Fig. 9: eine untere Ansicht der Trage- und Rolleinrichtung aus Fig. 8 in einem zusammengeklappten Zustand.
- Fig. 10: eine Seitenansicht der Trage- und Rolleinrichtung aus Fig. 8,
- Fig. 11: eine untere Ansicht der Trage- und Rolleinrichtung aus Fig. 8 in einem auseinandergeklappten Zustand.
- Fig. 12: eine untere Ansicht eines Behälters mit darin angebrachter Trage- und Rolleinrichtung gemäß einem exemplarischen Ausführungsbeispiel der Erfindung.
- Fig. 13: eine perspektivische Ansicht der Trage- und Rolleinrichtung aus Fig. 12.
- Fig. 14: eine andere perspektivische Ansicht der Trage- und Rolleinrichtung aus Fig. 12.
- Fig. 15: einen teilweise zusammengesetzten Zustand eines Behälters gemäß einem exemplarischen Ausführungsbeispiel der Erfindung.
- Fig. 16: einen anderen teilweise zusammengesetzten Zustand eines Behälters gemäß einem exemplarischen Ausführungsbeispiel der Erfindung.
- Fig. 17: noch einen anderen teilweise zusammengesetzten Zustand eines Behälters gemäß einem exemplarischen Ausführungsbeispiel der Erfindung.
- Fig. 18: eine Ansicht in das Innere eines Behälters gemäß einem exemplarischen Ausführungsbeispiel der Erfindung.
- Fig. 19: eine räumliche Ansicht eines Behälters gemäß einem exemplarischen Ausführungsbeispiel der Erfindung.
- Fig. 20: eine räumliche Ansicht einer Trage- und Rolleinrichtung gemäß einem exemplarischen Ausführungsbeispiel der Erfindung.

Gleiche oder ähnliche Komponenten in unterschiedlichen Figuren sind mit gleichen Bezugsziffern versehen.

Die Darstellungen der Figuren sind schematisch und nicht maßstäblich.

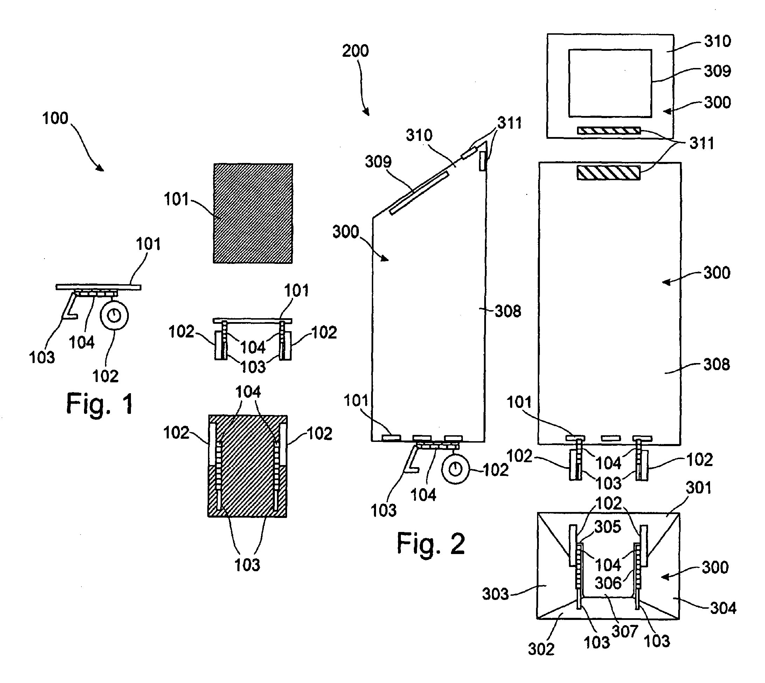

Im Weiteren werden bezugnehmend auf **Fig. 1** unterschiedliche Ansichten einer Trage- und Rolleinrichtung 100 gemäß einem exemplarischen Ausführungsbeispiel der Erfindung beschrieben.

Die Trage- und Rolleinrichtung 100 ist in der linken Darstellung von Fig. 1 in einer Seitenansicht gezeigt, in der oberen Ansicht in einer Draufsicht, in einer unteren Ansicht in einer Ansicht von unten her, und in einer zentralen Ansicht von vorne her.

Die Trage- und Rolleinrichtung 100 ist zum Befestigen an einem Behälter (siehe Fig. 2) eingerichtet, wobei der Behälter, wie nachfolgend näher beschrieben wird, eine Mehrzahl von zum Bilden eines Bodenbereichs miteinander in Eingriff bringbare Klappelemente aufweist, wobei eines der Klappelemente Aussparungen aufweist, zwischen welchen ein flächiger Abschnitt dieses Klappelements gebildet ist.

Die Trage- und Rolleinrichtung 100 weist eine Trageplatte 101 und an der Trageplatte befestigte Rollen 102 auf. Ferner enthält die Trage- und Rolleinrichtung 100 Stützelemente 103, mittels welchen die Trage- und Rolleinrichtung 100 auf einem Untergrund abstützbar ist. Jeweils ein Stützelement 103 und eine Rolle 102 sind an einer gemeinsamen Achse 104 befestigt. Mittels der gemeinsamem Achse 104 können die daran angebrachte Rolle 102 und das daran angebrachte Stützelement 03 geschwenkt werden, wodurch die Trage- und Rolleinrichtung 100 in einen ausgeklappten Zustand gebracht werden kann, der in der zentralen Ansicht von Fig. 1 gezeigt ist, und in einen eingeklappten Zustand gebracht werden kann, bei dem, ausgehend von der zentralen Ansicht von Fig. 1, die Achsen 104 entlang einer Drehachse, die orthogonal zu der Papierebene von Fig. 1 gerichtet ist, nach innen geklappt werden.

Bevor die Funktionalität der Trage- und Rolleinrichtung 100 näher beschrieben wird, wird bezugnehmend auf **Fig. 2** eine Transportvorrichtung 200 beschrieben, welche die Trage- und Rolleinrichtung 100 zeigt, wie sie im Inneren eines Behälters 300 aufgenommen ist.

Eine linke Ansicht in Fig. 2 zeigt die Transportvorrichtung 200 in einer Seitenansicht, eine obere Ansicht in Fig. 2 zeigt die Transportvorrichtung 200 in Draufsicht, eine untere Ansicht in Fig. 2 zeigt die Transportvorrichtung 200 in einer Ansicht von unten, und eine zentrale Darstellung in Fig. 2 zeigt die Transportvorrichtung 200 in einer anderen Seitenansicht.

Der Behälter 300 ist zum Befestigen an der Trage- und Rolleinrichtung 100 eingerichtet.

Der Behälter 300 enthält ein erstes Klappelement 301, ein zweites Klappelement 302, ein drittes Klappelement 303 und ein viertes Klappelement 304, die zum Bilden eines Bodenbereichs des Behälters 300 miteinander in Eingriff bringbar sind. Das erste Klappelement 301 weist einen ersten Schlitz 305 und einen zweiten Schlitz 306 auf, zwischen welchen ein flächiger Abschnitt 307 des ersten Klappelements 301 gebildet ist. Durch die Aussparungen 305, 306 sind die Rollen 102 derart hindurchgeführt, dass die Trageplatte 101 im Inneren des Behälters 300 angrenzend an den flächigen Abschnitt 307 positioniert ist, und dass die Rollen 102 gegenüber dem Bodenbereich 301 bis 304 des Behälters 300 nach außen hin überstehen.

Der Behälter 300 besteht aus Wellpappe.

Wie in Fig. 2 ferner gezeigt, ist das erste Klappelement 301 im Wesentlichen trapezförmig, wobei die Schlitze 305, 306 im Wesentlichen orthogonal zu beiden parallelen Seiten des im Wesentlichen trapezförmigen ersten Klappelements 301 verlaufend angeordnet sind. Die vier Klappelemente 301 bis 304 sind an unteren Endabschnitten von Seitenwänden 308 des Behälters 300 angebracht. Dem die Schlitze 305, 306 aufweisenden ersten Klappelement 301 liegt das zweite Klappelement 302 gegenüber, das eine in Fig. 2 nicht gezeigte Befestigungsöffnung aufweist, mit der ein Endabschnitt des ersten Klappelements 301 in Eingriff gebracht ist. Das dritte Klappelement 303 und das vierte Klappelement 304 sind beide im Wesentlichen trapezförmig.

In dem Behälter 300 ist ein Gut transportierbar, das durch eine Öffnung 309 in einem Deckel 310 des Behälters 300 einfüllbar, daraus entnehmbar und visuell inspizierbar ist. Wie aus der linken Ansicht von Fig. 2 hervorgeht, hat der Behälter 300 eine zu Halteelementen 311 hin spitz zulaufende Gestalt. Die Halteelemente 311 sind als Griff in Form von Öffnungen in dem Deckel 310 und in der hinteren Wand 308 angebracht.

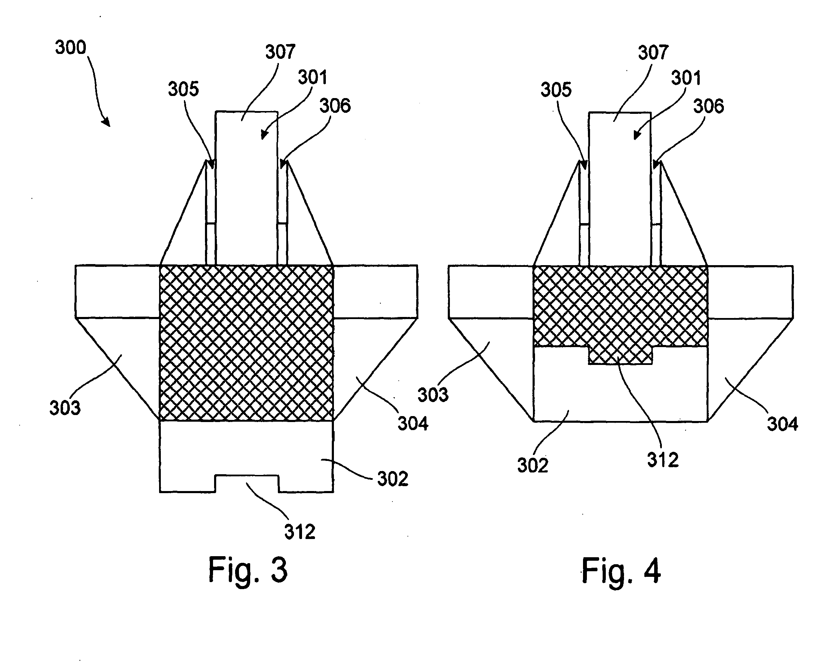

In **Fig. 3** ist eine Draufsicht des Behälters 300 in einem Zustand mit auseinander genommenem Boden gezeigt. Insbesondere ist eine Befestigungsöffnung 312 in dem zweiten Klappelement 302 gezeigt, welcher mit einem Endabschnitt des flächigen Abschnitts 307 des ersten Klappelements 301 in Eingriff bringbar ist.

In **Fig. 4** ist ein anderer Betriebszustand des Behälters 300 aus Fig. 3 gezeigt, in welchem das zweite Klappelement 302 zum Bilden eines Behälterbodens nach innen geklappt ist.

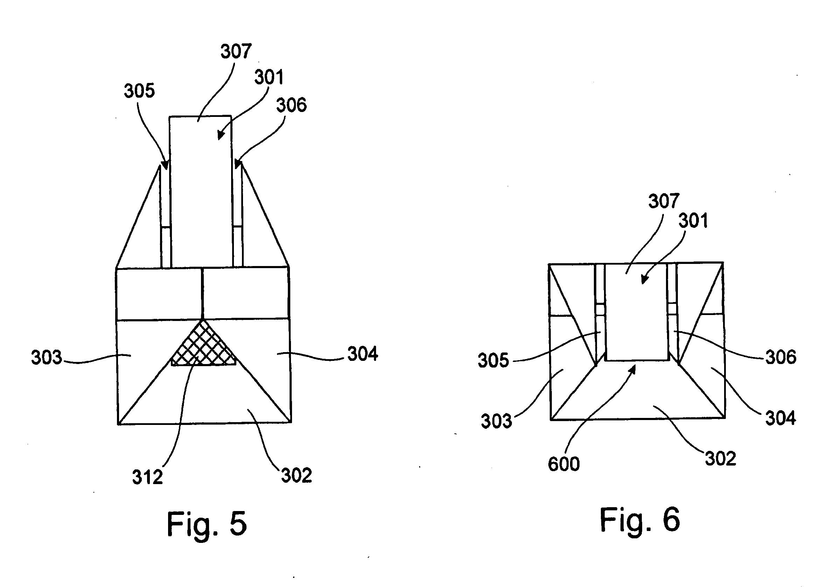

In **Fig. 5** ist ein weiterer Betriebszustand des Behälters 300 aus Fig. 3 gezeigt, in welchem zusätzlich die dritten und vierten Klappelemente 303, 304 nach innen geklappt sind.

In **Fig. 6** ist noch ein anderer Betriebszustand des Behälters 300 gezeigt, in welchem, ausgehend von Fig. 5, das erste Klappelement 301 nach innen geklappt ist, sodass ein Endabschnitt des flächigen Abschnitts 307 mit der Befestigungsöffnung 312 des zweiten Klappelements 302 in Eingriff gebracht ist, wodurch ein fester Bodenbereich gebildet ist. Wie in Fig. 6 gezeigt ist in einem Eingriffsbereich 600 die Lasche 307 des ersten Klappelements 301 in die Aussparung 312 des zweiten Klappelements 302 eingeführt.

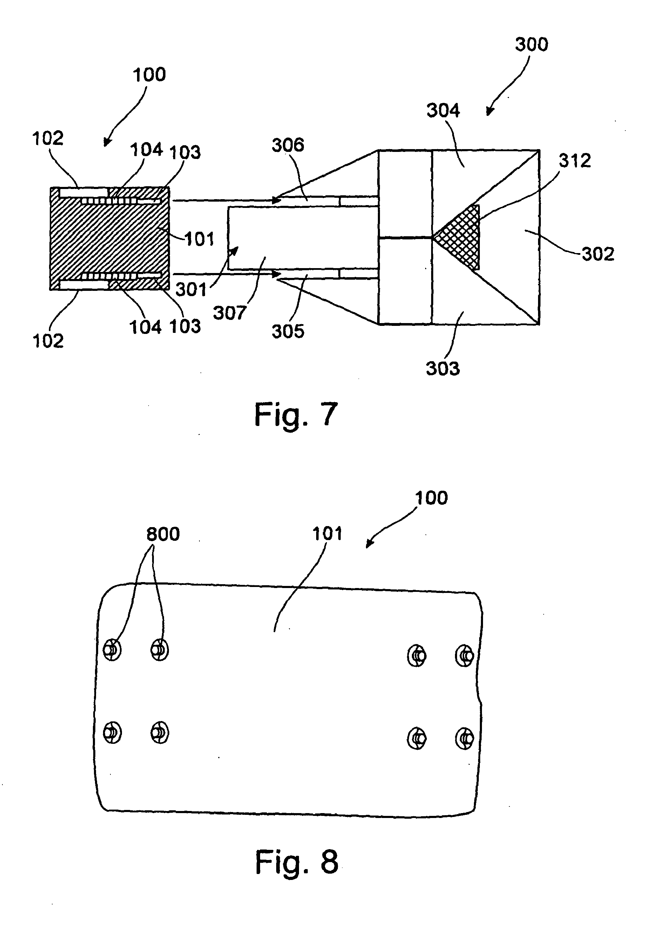

In **Fig. 7** ist gezeigt, wie ein Teil der Trage- und Rolleinrichtung 100 in den Behälter 300 eingeführt werden kann. Hierzu werden seitlich durch die Schlitze 305, 306 die Räder 102 der Trage- und Rolleinrichtung 100 in das erste Klappelement 301 eingeführt.

Es ist anzumerken, dass in Fig. 7 die Bodenplatte 101 von oben und durchsichtig skizziert ist.

Die Bodenplatte 101 mit den daran befestigten Rädern 102 wird auf das erste Klappelement 301 aufgesetzt, danach gemeinsam mit dem ersten Klappelement 301 nach innen geklappt und mit der Lasche an einem Endabschnitt des flächigen Abschnitts 307 in der Befestigungsöffnung 312 des zweiten Klappelements 302 angrenzend an die dritten und vierten Klappelemente 303, 304 fixiert. Die Schlitze 305, 306 in dem ersten Klappelement 301 ermöglichen ein Austreten der Achsen 104 nach unten und sind vorzugsweise der Achshalterung angepasst. Die Radbodenplatte 101 liegt also zwischen dem ersten Klappelement 301 und den zweiten bis vierten Klappelementen 302 bis 304 (oben) eingeklemmt und damit fixiert.

**Fig. 8** zeigt eine Ansicht der Trage- und Rolleinrichtung 100 von oben.

Insbesondere sind in Fig. 8 Befestigungsnieten 800 gezeigt, die zum Befestigen der Räder 102, der Stützelemente 103 bzw. der Achsen 104 an der Trageplatte 101 vorgesehen sind.

**Fig. 9** zeigt die Trage- und Rolleinrichtung 100 von unten in einem Betriebszustand, in dem die Räder 102 und die Stützelemente 103 eingeklappt sind.

**Fig. 10** zeigt die Trage- und Rolleinrichtung 100 von der Seite her und in einem Zustand, in welchem die Räder 102 und die Stützelemente 103 ausgeklappt sind.

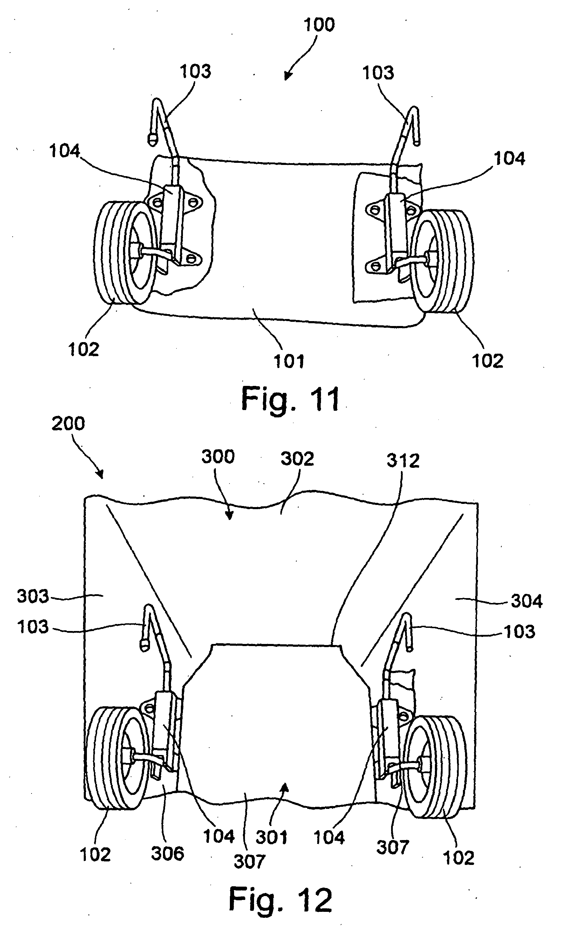

**Fig. 11** zeigt die Trage- und Rolleinrichtung 100 von unten, ebenfalls mit ausgeklappten Rädern 102 und Stützelementen 103.

**Fig. 12** zeigt eine Ansicht der Transportvorrichtung 200 von unten, in welcher die Trage- und Rolleinrichtung 100 in den Behälter 300 eingeführt ist.

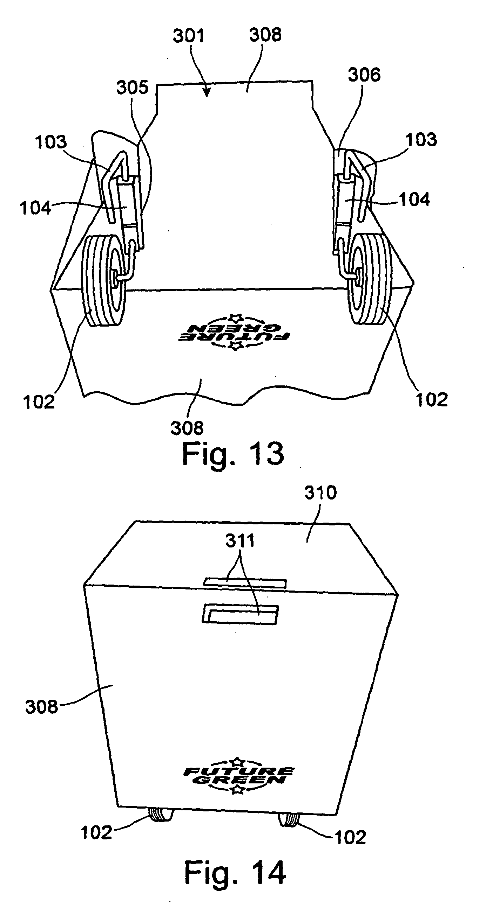

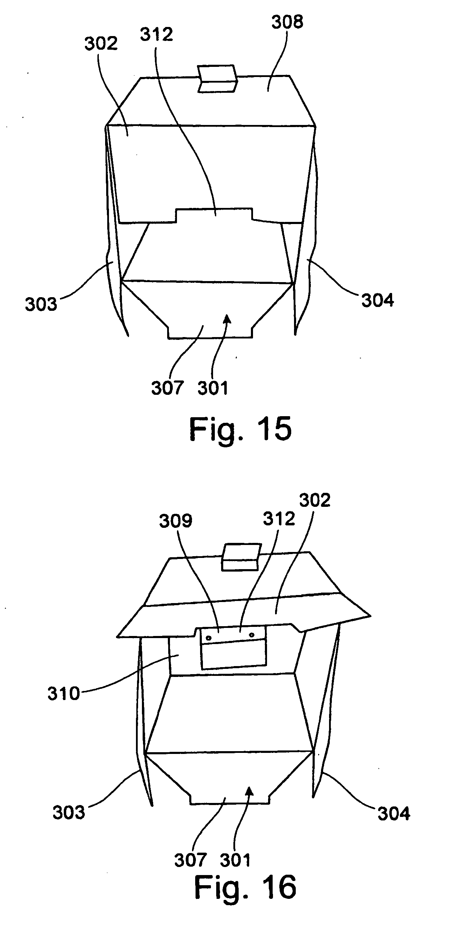

**Fig. 13** bis **Fig. 17** zeigen unterschiedliche Ansichten der Transportvorrichtung 200, bei denen der Behälter 300 in unterschiedlichen Betriebszuständen bezüglich der Trage- und Rolleinrichtung 100 gezeigt ist.

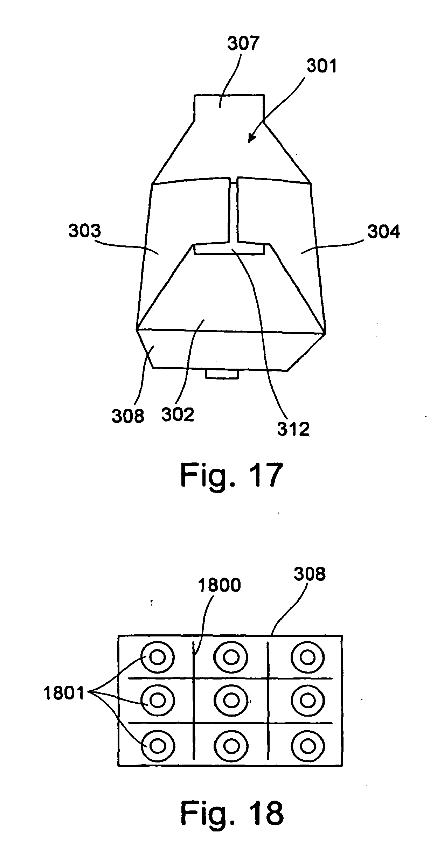

**Fig. 18** zeigt eine Ansicht des Inneren eines Behälters 300 gemäß einem exemplarischen Ausführungsbeispiel der Erfindung.

Der Behälter 300 enthält eine Trennwand 1800, mittels welcher ein Stauvolumen im Inneren des Behälters 300 in eine Mehrzahl von Teilvolumina aufgeteilt ist. In jedem Teilvolumen ist eine Weinflasche 1801 untergebracht.

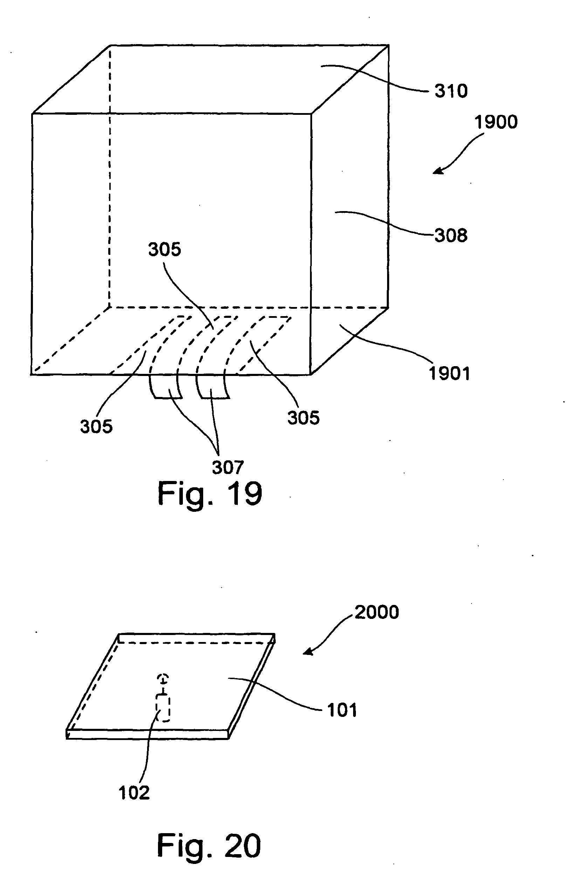

**Fig. 19** zeigt eine räumliche Ansicht eines Behälters 1900 gemäß einem exemplarischen Ausführungsbeispiel der Erfindung.

Bei dem Behälter 1900 ist der Boden 1901 aus nur einem flächigen Element gebildet, in das drei Schlitze 305 eingebracht sind. Zwischen benachbarten Schlitzen 305 ist jeweils eine Lasche 307 gebildet.

**Fig. 20** zeigt eine räumliche Ansicht einer Trage- und Rolleinrichtung 2000 gemäß einem exemplarischen Ausführungsbeispiel der Erfindung.

Die Trage- und Rolleinrichtung 2000 enthält eine Trageplatte 101 mit einer einzigen Rolle 102 an der Unterseite der Trageplatte 101.

Um die Trage- und Rolleinrichtung 2000 an dem Behälter 1900 anzubringen, wird die Trageplatte 101 nach Wegklappen der Laschen 307 in den Boden des Behälters 1900 eingeführt. Die Laschen 307 werden dann zurückgeklappt und an der Seitenwand 308 des Behälters 1900 mittels eines geeigneten Gegenstücks befestigt, womit die Trageplatte 101 im Inneren des Behälters 1900 aufgenommen ist. Die Rolle 102 ist durch den zentralen Schlitz 305 hindurchgeführt.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 100: Trage- und Rolleinrichtung
- 101: Trageplatte
- 102: Rollen
- 103: Stützelement
- 104: Achse
- 200: Transportvorrichtung
- 300: Behälter
- 301: erstes Klappelement
- 302: zweites Klappelement
- 303: drittes Klappelement
- 304: viertes Klappelement
- 305: erster Schlitz
- 306: zweiter Schlitz
- 307: flächiger Abschnitt
- 308: Seitenwände
- 309: Öffnung
- 310: Deckel
- 311: Haltelemente
- 312: Befestigungsöffnung
- 600: Eingriff
- 800: Befestigungsnieten
- 1800: Trennelement
- 1801: Weinflaschen
- 1900: Behälter
- 1901: Boden
- 2000: Trage- und Rolleinrichtung

## Patentansprüche

1. Transportvorrichtung, aufweisend:
ein Behälter (300); und
eine Trage- und Rolleinrichtung (100) mit einer Trageplatte (101) und mindestens einer daran befestigten Rolle (102);
wobei der Behälter (300) zum Befestigen an der Trage- und Rolleinrichtung (100) eingerichtet ist,
wobei der Behälter (300) aufweist:
einen Bodenbereich (301 bis 304);
wobei der Bodenbereich (301 bis 304) Aussparungen (305, 306) aufweist, zwischen welchen ein flächiger Abschnitt (307) gebildet ist;
wobei die mindestens eine Rolle (102) derart durch mindestens eine der Aussparungen (305, 306) hindurchführbar ist, dass die Trageplatte (101) am Bodenbereich (301 bis 304) befestigbar ist und dass die mindestens eine Rolle (102) aus dem Bodenbereich (301 bis 304) des Behälters (300) nach außen hin vorsteht;
wobei die Aussparungen als im Wesentlichen parallel verlaufende Schlitze (305, 306) vorgesehen sind.

2. Transportvorrichtung nach Anspruch 1,
wobei der Behälter (300) hergestellt aus zumindest einem Material der Gruppe bestehend aus Karton, Wellpappe, Kunststoff, Blech und Holz.

3. Transportvorrichtung nach Anspruch 1 oder 2,
mit mindestens einer Trennwand (1800) innerhalb des Behälters (300), mittels welcher mindestens einen Trennwand (1800) ein Stauvolumen im Inneren des Behälters (300) in eine Mehrzahl von Teilvolumina aufteilbar ist.

4. Transportvorrichtung nach Anspruch 3,
wobei die Trennwand (1800) innerhalb des Behälters (300) derart eingerichtet ist, dass Getränke transportierbar sind, insbesondere von Wein (1801).

5. Transportvorrichtung nach einem der Ansprüche 1 bis 4,
bei der mindestens eine Aussenseite und/oder mindestens eine Innenseite des Behälters (300) bedruckt ist.

6. Transportvorrichtung nach einem der Ansprüche 1 bis 5,
wobei der Behälter (300) eine Mehrzahl von zum Bilden des Bodenbereichs miteinander in Eingriff bringbare Klappelemente (301 bis 304) aufweist.

7. Transportvorrichtung nach Anspruch 6,
wobei ein die Aussparungen (305, 306) aufweisendes Klappelement (301) im Wesentlichen trapezförmig ist, wobei die Aussparungen (305, 306) im Wesentlichen orthogonal zu den beiden parallelen Seiten des im Wesentlichen trapezförmigen Klappelements (301) verlaufend angeordnet sind.

8. Transportvorrichtung nach Anspruch 7,
wobei der Behälter (300) vier Kläppelemente (301 bis 304) aufweist, die an unteren Endabschnitten von Seitenwänden (308) des Behälters (300) angebracht sind, wobei ein dem die Aussparungen (305, 306) aufweisendes Klappelement (301) gegenüberliegendes Klappelement (302) eine Befestigungsöffnung (312) aufweist, mit der ein Endabschnitt des die Aussparungen (305, 306) aufweisenden Klappelements (301) in Eingriff bringbar ist.

9. Transportvorrichtung nach Anspruch 8, bei der das die Befestigungsöffnung (312) aufweisende Klappelement (302) im Wesentlichen rechteckförmig ist.

10. Transportvorrichtung nach Anspruch 8 oder 9,
bei der die beiden restlichen Klappelemente (303, 304) im Wesentlichen als Trapeze gebildet sind.

11. Transportvorrichtung nach einem der Ansprüche 1 bis 10,
mit einer Abtrennung, mittels welcher ein Stauvolumen im Inneren des Behälters (300) räumlich von der Trageplatte (101) im inneren des Behälters (300) angrenzend an den flächigen Abschnitt (307) abtrennbar ist.

12. Transportvorrichtung nach einem der Ansprüche 1 bis 11,
wobei der Behälter (300) quaderförmig, halbkugelförmig oder halbzylinderförmig ausgebildet ist.

13. Transportvorrichtung nach einem der Ansprüche 1 bis 12,
wobei der Behälter (300)eine Mehrzahl von Seitenwänden (308) aufweist,
wobei an mindestens einer Seitenwand (308) ein Halteelement (311) gebildet ist.

14. Transportvorrichtung nach einem der Ansprüche 1 bis 12,
wobei der Behälter (300)einen Deckelbereich (310) aufweist, wobei an dem Deckelbereich (310) ein Halteelement (311) gebildet ist.

15. Transportvorrichtung nach einem der Ansprüche 1 bis 12,
wobei der Behälter (300) eine Mehrzahl von Seitenwänden (308) und einen Deckelbereich (310) aufweiset, wobei an mindestens einer Seitenwand (308) und an dem Deckelbereich (310) ein Halteelement (311) gebildet ist.

16. Transportvorrichtung nach einem der Ansprüche 13 bis 15,
wobei das Halteelement (311) ein Loch oder ein Haltegriff ist.

17. Transportvorrichtung nach einem der Ansprüche 1 bis 16,
ferner aufweisend ein Stützelement (103), mittels welchem die Trage- und Rolleinrichtung (100) auf einem Untergrund abstützbar ist.

18. Transportvorrichtung nach Anspruch 17,
bei der die mindestens eine Rolle (102) und/oder das Stützelement (103) der Trage- und Rolleinrichtung (100) derart einklappbar vorgesehen ist oder sind, dass im eingeklappten Zustand die Trage- und Rolleinrichtung (100) eine im Wesentlichen flächige Struktur bildet.

19. Verwendung der Transportvorrichtung nach einem der Ansprüche 1 bis 18 zum Transportieren von Büromaterialien, insbesondere Papier, und von Getränken, insbesondere Wein.

## Claims

1. Conveying apparatus comprising
a container (300); and
a supporting and rolling mechanism (100) with a supporting plate (101) and at least one roller (102) attached to the supporting plate;
wherein the container (300) is arranged for being attached to the supporting and rolling mechanism (100),
wherein the container (300) comprises:
a bottom region (301 to 304);
wherein the bottom region (301 to 304) comprises notches (305, 306),
wherein a flat section (307) is formed between the notches;
wherein the at least one roller (102) is leadable through at least one of the notches (305, 306) such that the supporting plate (101) is attachable at the bottom region (301 to 304) and that the at least one roller (102) protrudes from the bottom region (301 to 304) of the container (300) outwardly;
wherein the notches are provided as substantially parallel slots (305, 306).

2. Conveying apparatus according to claim 1,
wherein the container (300) is made from at least one material of the group consisting of carton, corrugated paperboard, plastic, sheet metal and wood.

3. Conveying apparatus according to claim 1 or 2,
with at least one separating wall (1800) within the container (300),
wherein a storage space inside the container (300) is dividable in a plurality of partial volumes by means of the at least one separating wall (1800).

4. Conveying apparatus according to claim 3,
wherein the separating wall (1800) within the container (300) is arranged such that beverages are transportable, in particular of wine (1801).

5. Conveying apparatus according to one of the claims 1 to 4,
whereby at least one outer surface and/or at least one inner surface of the container (300) is printed.

6. Conveying apparatus according to one of the claims 1 to 5,
whereby the container (300) comprises a plurality of foldaway elements (301 to 304) being meshable for forming the bottom region.

7. Conveying apparatus according to claim 6,
wherein a foldaway element (301) comprising the notches (305, 306) is substantially trapeze-shaped, wherein the notches (305, 306) are arranged substantially orthogonally at both parallel sides of the substantially trapeze-shaped foldaway element (301).

8. Conveying apparatus according to claim 7,
wherein the container (300) comprises four foldaway elements (301 to 304), which are attached at lower end segments of side walls (308) of the container (300), wherein a foldaway element (302) opposing the foldaway element (301) comprising the notches (305, 306) comprises an attachment aperture (312), with which attachment aperture an end segment of the foldaway element (301) comprising the notches (305, 306) is meshable.

9. Conveying apparatus according to claim 8,
whereby the foldaway element (302) comprising the attachment aperture (312) is substantially rectangular-shaped.

10. Conveying apparatus according to claim 8 or 9,
whereby both remaining foldaway elements (303, 304) are formed substantially as trapezes.

11. Conveying apparatus according to one of the claims 1 to 10,
with a separation, by means of which a storage space inside the container (300) is spatially separable from the supporting plate (101) inside the container (300) adjacent to the flat section (307).

12. Conveying apparatus according to one of the claims 1 to 11,
wherein the container (300) is formed cuboid-shaped, semispherical-shaped or half cylinder-shaped.

13. Conveying apparatus according to one of the claims 1 to 12,
wherein the container (300) comprises a plurality of side walls (308),
wherein a grab element (311) is formed at at least one side wall (308).

14. Conveying apparatus according to one of the claims 1 to 12,
wherein the container (300) comprises a cover region (310), wherein a grab element (311) is formed at the cover region (310).

15. Conveying apparatus according to one of the claims 1 to 12,
wherein the container (300) comprises a plurality of side walls (308) and a cover region (310), wherein a grab element (311) is formed at at least one side wall (308) and at the cover region (310).

16. Conveying apparatus according to one of the claims 13 to 15,
wherein the grab element (311) is a hole or a grab handle.

17. Conveying apparatus according to one of the claims 1 to 16,
further comprising a supporting element (103), by means of which the supporting and rolling mechanism (100) is supportable on a subsurface.

18. Conveying apparatus according to claim 17,
whereby the at least one roller (102) and/or the supporting element (103) of the supporting and rolling mechanism (100) is or are provided foldable in such a way that in a folded state the supporting and rolling mechanism (100) forms a substantially flat structure.

19. Use of the conveying apparatus according to one of the claims 1 to 18 for transporting office supplies, in particular paper, and beverages, in particular wine.

## Revendications

1. Dispositif de transport, présentant :
un récipient (300) ; et
un équipement (100) de support et de roulement avec un plateau de support (101) et au moins une roulette (102) fixée sur ce dernier ;
sachant que le récipient (300) est destiné à être fixé sur l'équipement (100) de support et de roulement,
sachant que le récipient (300) présente :
une région de fond (301 à 304) ;
sachant que la région de fond (301 à 304) présente des évidements (305, 306) entre lesquels est formée une partie plane (307) ;
sachant que la ou les roulettes (102) peuvent être passées à travers au moins un des évidements (305, 306) de telle sorte que le plateau de support (101) peut être fixé sur la région de fond (301 à 304), et que la ou les roulettes (102) dépassent de la région de fond (301 à 304) du récipient (300) vers l'extérieur ; sachant que les évidements sont prévus sous la forme de fentes (305, 306) s'étendant essentiellement en parallèle.

2. Dispositif de transport selon la revendication 1, sachant que le récipient (300) est fabriqué à partir d'au moins un matériau du groupe constitué du carton, du carton ondulé, du plastique, de la tôle et du bois.

3. Dispositif de transport selon la revendication 1 ou 2, avec au moins une paroi séparatrice (1800) à l'intérieur du récipient (300), au moyen de laquelle un volume de rangement à l'intérieur du récipient (300) peut être divisé en une pluralité de volumes partiels.

4. Dispositif de transport selon la revendication 3, sachant que la paroi séparatrice (1800) à l'intérieur du récipient (300) est conçue de telle sorte que des boissons peuvent être transportées, en particulier du vin (1801).

5. Dispositif de transport selon l'une des revendications 1 à 4, selon lequel au moins un côté extérieur et/ou au moins un côté intérieur du récipient (300) est imprimé.

6. Dispositif de transport selon l'une des revendications 1 à 5, sachant que le récipient (300) présente une pluralité d'éléments rabattables (301 à 304) pouvant être amenés en engagement mutuel pour former la région de fond.

7. Dispositif de transport selon la revendication 6, sachant qu'un élément rabattable (301) présentant les évidements (305, 306) est essentiellement trapézoïdal, sachant que les évidements (305, 306) sont disposés en s'étendant essentiellement orthogonalement aux deux côtés parallèles de l'élément rabattable (301) essentiellement trapézoïdal.

8. Dispositif de transport selon la revendication 7, sachant que le récipient (300) présente quatre éléments rabattables (301 à 304) qui sont installés sur des parties terminales inférieures de parois latérales (308) du récipient (300), sachant qu'un élément rabattable (302) opposé à l'élément rabattable (301) présentant les évidements (305, 306) présente une ouverture de fixation (312) avec laquelle une partie terminale de l'élément rabattable (301) présentant les évidements (305, 306) peut être amenée en engagement.

9. Dispositif de transport selon la revendication 8, selon lequel l'élément rabattable (302) présentant l'ouverture de fixation (312) est essentiellement rectangulaire.

10. Dispositif de transport selon la revendication 8 ou 9, selon lequel les deux autres éléments rabattables (303, 304) sont réalisés essentiellement sous forme de trapèzes.

11. Dispositif de transport selon l'une des revendications 1 à 10, avec une séparation au moyen de laquelle un volume de rangement à l'intérieur du récipient (300) peut être spatialement séparé du plateau de support (101) à l'intérieur du récipient (300), au voisinage de la partie plane (307).

12. Dispositif de transport selon l'une des revendications 1 à 11, sachant que le récipient (300) est réalisé parallélépipédique, hémisphérique ou semi-cylindrique.

13. Dispositif de transport selon l'une des revendications 1 à 12, sachant que le récipient (300) présente une pluralité de parois latérales (308), sachant qu'un élément de maintien (311) est formé sur au moins une paroi latérale (308).

14. Dispositif de transport selon l'une des revendications 1 à 12, sachant que le récipient (300) présente une région de couvercle (310), sachant qu'un élément de maintien (311) est formé sur la région de couvercle (310).

15. Dispositif de transport selon l'une des revendications 1 à 12, sachant que le récipient (300) présente une pluralité de parois latérales (308) et une région de couvercle (310), sachant qu'un élément de maintien (311) est formé sur au moins une paroi latérale (308) et sur la région de couvercle (310).

16. Dispositif de transport selon l'une des revendications 13 à 15, sachant que l'élément de maintien (311) est un trou ou une poignée de maintien.

17. Dispositif de transport selon l'une des revendications 1 à 16, présentant en outre un élément de soutien (103) au moyen duquel l'équipement (100) de support et de roulement peut être soutenu sur un sol.

18. Dispositif de transport selon la revendication 17, sachant que la ou les roulettes (102) et/ou l'élément de soutien (103) de l'équipement (100) de support et de roulement sont prévus rabattables de telle sorte que, dans l'état rabattu, l'équipement (100) de support et de roulement forme une structure essentiellement plane.

19. Utilisation du dispositif de transport selon l'une des revendications 1 à 18 pour le transport de fournitures de bureau, en particulier de papier, et de boissons, en particulier de vin.
